# EUROPEAN PATENT APPLICATION

(11) **EP 1 975 758 A1**
(43) Date of publication of application: **01.10.2008**
(21) Application number: 07104852.4
(22) Date of filing: 26.03.2007
(51) Int. Cl.: G05D 16/10

(54) **Device for controlling fluid flow**

(71) Applicant: INNAS B.V., 4823 AE Breda (NL)
(72) Inventor: Achten, Peter, 3613 CA, Eindhoven (NL)
(74) Representative: Uittenbogaart, Gustaaf Adolf

(57) **Abstract**

The invention relates to a device for controlling a liquid flow, comprising a housing, a valve body which can be moved in a direction of movement in the housing and has an internal channel which is in communication with a first pipe connection, and a first chamber which is in communication with a second pipe connection, which first chamber has, more or less perpendicular to the direction of movement, a first annular sealing surface against which a second annular sealing surface of the valve body can rest in a sealing manner under the influence of pressure means, and thereby produces a first seal with an annular gap having two walls which are formed by the annular sealing surfaces. According to the invention, one of the walls comprises a thin ring with an inner periphery and an outer periphery or a thin disc with a centre and an outer periphery, the inner periphery or the centre being capable of moving elastically in the direction of movement relative to the outer periphery.

## Description

The invention relates to a device according to the preamble of Claim 1. Such devices are known, for example as a reducing valve by means of which a liquid flow at a certain pressure is converted into a liquid flow at a lower pressure. The disadvantage of the known devices is that the adjustment of the pressure to be supplied is very time-consuming.

In order to avoid this disadvantage, the device is designed according to the characterizing part of Claim 1. By moving the inner periphery or the centre relative to the outer periphery, the annular gap between the first wall and the second wall becomes convergent, parallel and/or divergent. This causes the pressure pattern in the gap, and consequently the average pressure in said gap, to change. Changing the average pressure in the gap causes the forces upon the valve body to change, and the valve body will move until there is a new state of equilibrium in the forces upon the valve body. This new state of equilibrium means a different position of the valve body, and therefore a different gap width between housing and valve body, so that the liquid flow from the first pipe connection to the second pipe connection changes.

In accordance with one embodiment, the device is designed according to Claim 2. As a result of this, it is possible to control the valve body in a simple manner by means of a pressure difference in order to influence the liquid flow.

In accordance with one embodiment, the device is designed according to Claim 3. With a pressure pulsation in the internal channel, there is a pressure difference between the internal channel and the second chamber for a short time. As a result of this, the disc is deformed and the valve body moves away from the disc for a short time, and liquid flows out of the internal channel to the first chamber. After the pressure difference disappears, the valve body moves to the plate, and the seal closes again. As a result of this, the pressure pulsations are damped.

In accordance with one embodiment, the device is designed according to Claim 4. As a result of this, the valve is easily adjustable irrespective of the liquid pressure.

In accordance with one embodiment, the device is designed according to Claim 5. As a result of this, the ring or the disc is quickly deformed with a slight deformation by an electrical signal, with the result that the valve body moves and great changes in the liquid flow are achieved. Changes in the liquid flow can be controlled quickly in this way.

The invention also relates to a device according to Claim 6. Through the slight deformation of the disc, a larger gap is produced locally between the valve body and the disc. In the situation in which the liquid pressure at the outer periphery of the valve body is greater in the first chamber than that at the internal channel, because of the locally larger gap the valve body will move away from the disc, and because of the pressure on the valve body will remain away from it. In this way a permanent pressure relief in the second pipe connection is achieved with a slight movement.

The invention is explained below on the basis of a number of exemplary embodiments with reference to a drawing. In the drawing:
Figure 1 shows a diagrammatic section of a valve designed for influencing or switching a liquid flow, in which the valve is shown in a neutral position;
Figure 2 shows a diagrammatic section of the valve of Figure 1, in which the valve is closed and set in such a way that said valve remains closed;
Figure 3 shows a diagrammatic section of the valve of Figure 1, in which the valve is closed and is set in such a way that said valve will open;
Figure 4 shows a diagrammatic section of the valve of Figure 1, in which the valve is opened and is set in such a way that said valve will remain opened;
Figure 5 shows a diagrammatic section of the valve of Figure 1, in which the valve is opened and is set in such a way that said valve will close; and
Figure 6 shows a diagrammatic section of the valve of Figure 1, in which said valve has been adapted so that it can be used as a pulsation damper.

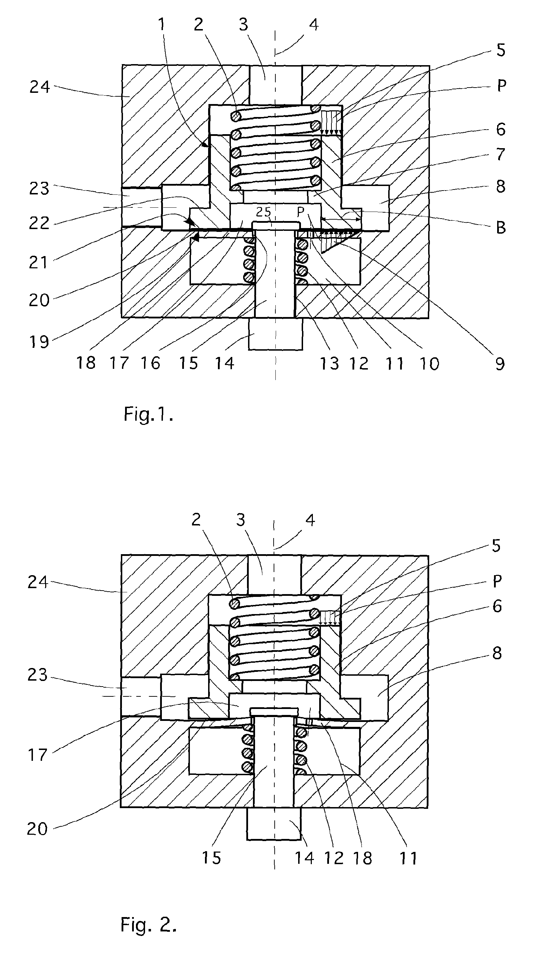

Figure 1 shows a housing 24 having a cylindrical bore 1 with an axis 4. A valve body 6 can move in the bore 1 in the direction of the axis 4 in the housing 24, in the course of which the internal wall of the cylindrical bore 1 and the external wall of the valve body 6 can move relative to each other without leakage occurring. On the one side the cylindrical bore 1 is connected to a first pipe connection 3, and on the other side the bore 1 ends in a chamber 8 which is connected to a second pipe connection 23. Running through the valve body 6 is a channel 17 which connects the first pipe connection 3 and the chamber 8 to each other. On the side opposite the cylindrical bore 1, the chamber 8 has a diaphragm 18 having at the position of the valve body a flexible wall 19 against which a sealing surface 21 of the valve body 6 can be pressed. As a result of this, a gap 20 between the valve body 6 and the flexible wall 19 can become so small that the valve body 6 forms a seal on the flexible wall 19. When the valve body 6 with the sealing surface 21 forms a seal on the flexible wall 19 the connection between the first pipe connection 3 and the second pipe connection 23 is blocked or closed, and when the valve body 6 is at some distance from the flexible wall 19 and the gap 20 is of some size the connection between the first pipe connection 3 and the second pipe connection 23 is open.

The valve body 6 is forced by a spring 2 in the direction of the axis 4 towards the diaphragm 18. In order to support the spring 2 on the valve body 6, the valve body 6 has a supporting ring 7. On the side facing the flexible wall 19 or the diaphragm 18, the valve body 6 has a broad edge 22, with the result that the sealing surface 21 has a width B. In the situation shown the flexible wall 19 is parallel to the sealing surface 21. When the liquid pressure in the channel 17 is equal to P and the liquid pressure in the second pipe connection 23 is zero, a pressure profile 9 shows the curve of the liquid pressure in the gap 20: the liquid pressure in the gap 20 has a logarithmically decreasing curve and at a small width B relative to the diameter of the sealing surface 21 decreases more or less linearly over the width B of the gap 20, and in doing so exerts a force upon the valve body 6 in the direction of the axis 4. The average liquid pressure in the gap 20 in this case is approximately half the difference between the pressure at the beginning and end of the gap 20.

The valve body 6 is also subject to other forces in the direction of the axis 4 through liquid pressure on surfaces of the valve body 6. If the liquid pressure in the second pipe connection 23 is equal to zero, the valve body 6 is subject only to a force exerted by the liquid pressure of the first pipe connection 3 inside the cylindrical bore 1 upon the surface of the valve body 6, viewed in the direction of the axis 4 towards the flexible wall, possibly minus the surface that is visible in the opposite direction. In the example shown the liquid pressure is effective only upon an annular surface of the valve body 6 on the side of the first pipe connection 3. A constant liquid pressure P with a flat pressure profile 5 prevails upon this surface.

So long as the closing forces upon the valve body 6, as a result of the pressure profile 5 and the force of the spring 2, are greater than the oppositely directed forces of the pressure profile 9, the valve body 6 will remain resting against the flexible surface 19. If the oppositely directed forces become greater than the closing forces through the rise in the liquid pressure P in the first pipe connection 3, the valve body 6 will move away from the flexible surface 19, and the gap 20 will become greater. It will be clear to the person skilled in the art that for this to occur the surface of the gap 20 against which the oppositely directed force occurs, and where the average liquid pressure is about half the liquid pressure P in the channel 17, must be at least twice as large as the surface upon which the liquid pressure P prevailing in the channel 17 causes a part of the closing force. Through the increase in the size of the gap 20, the spring force of the spring 2 will increase, with the result that the closing force becomes greater until the closing force and the oppositely directed force are in equilibrium with each other. Through the enlarged gap 20, liquid will now flow from the first pipe connection 3 to the second pipe connection 23, the liquid pressure P in the channel 17 being dependent upon the spring 2 and the width B of the broad edge 22. The functioning of the valve described above is the same as the functioning of a valve that is known as a reducing valve, in which case changing the force of the spring 2 makes it possible to set the maximum liquid pressure in a liquid system connected to the first pipe connection 3.

The valve of Figure 1 differs from the known reducing valve in that the diaphragm 18 can be deformed to a sloping surface by an actuator 14. On the outside diameter of the diaphragm 18 said sloping surface is generally more or less perpendicular to the axis 4 and acquires an increasing slope as it approaches the axis 4. On the side of the diaphragm 18 facing away from the valve body 6 a chamber 11 is provided for this purpose in the housing 24. The chamber 11 has a diameter that more or less corresponds to or is slightly larger than the greatest diameter of the gap 20. The chamber 11 preferably has a diameter that corresponds to 0.5 to 1.5 times the largest diameter of gap 20. The chamber 11 is connected by a bore 10 to the channel 17, with the result that the liquid pressure in the channel 17 and the chamber 11 is the same. As a result of this and as a result of the limited maximum dimension of the chamber 11, the liquid pressure in the channel 17 has no influence on the shape and/or deformation of the diaphragm 18. An adjusting pin 15 with a shoulder 25 projects through a hole 16 in the diaphragm 18. The adjusting pin 15 also projects through a hole 13 in the external wall of the housing 24 and can be moved in the direction of the axis 4 by an actuator 14. There are means (not shown) that prevent leakage from occurring through the hole 13 along the adjusting pin 15. Between the wall of the housing 24 and the diaphragm 18 a spring 12 is fitted around the adjusting pin 15, which spring is forced against the diaphragm 18.

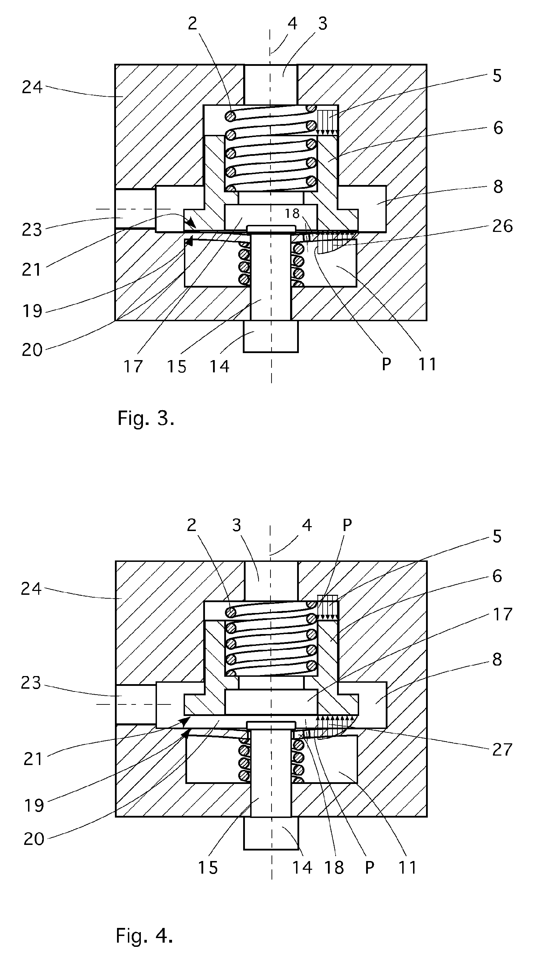

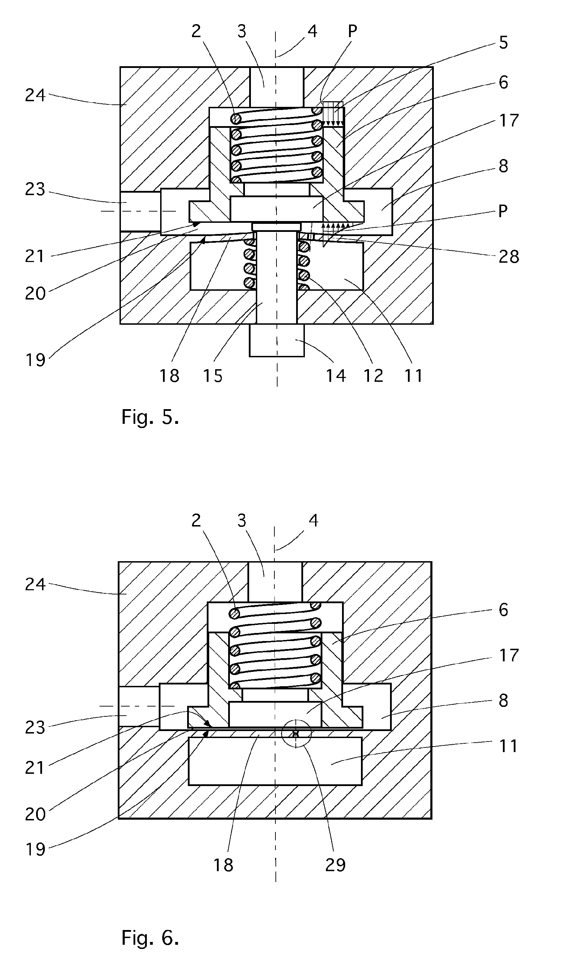

The actuator 14 can move the adjusting pin 15 in the direction of the axis 4, and in doing so together with the spring 12 causes an elastic deformation of the diaphragm 18 in such a way that the gap 20, viewed from the channel 17, can become divergent (see Figures 2 and 5) or convergent (see Figures 3 and 4). A usual diameter of the valve body 6 is between 10 and 50 mm, and the thickness of the diaphragm 18 is approximately 0.5 to 1.5 mm. Owing to the fact that the diaphragm 18 is subject to the same pressure on both sides, it may also be thinner, if desired. The movement of the adjusting pin 15 from the centre position, in which the gap 20 has parallel walls, is at most approximately 250 µm. A movement of approximately 5 - 50 µm in the case of smaller diameters of the valve body 6 is generally sufficient to achieve the effect of changing the shape of the gap 20 described below. The deformation of the diaphragm 18 has an influence on the shape of the gap 20 by changing the slope of the flexible wall 19. Through the change in the shape of the gap 20, the pressure profile 9 changes, and consequently so does the oppositely directed force upon the valve body 6. It is therefore possible, by changing the slope of the flexible wall 19 and the diaphragm 18, to change the forces upon the valve body 6, and consequently also the position of the valve body 6, and therefore also to change the size of the gap 20.

The actuator 14 for the elastic deformation of the diaphragm 18 can be provided in different forms. The actuator 14 can be in the form of a mechanical adjusting device of the adjusting pin 15, for example with a screw thread or with a lever, it being possible for the adjustment to be made manually or by an electrically controlled drive. Adjustment is also possible by hydraulic means or by electrical means. The construction shown comprises the adjusting pin 15, which is inserted through the hole 16 in the diaphragm 18. The elastic deformation of the diaphragm 18 can also be achieved without the intervention of an adjusting pin 15, by making an actuator 14 exert a force directly upon the diaphragm 18. This can be achieved by exerting purely pressure forces upon the diaphragm 18, or also by fixing on the diaphragm 18 a pin that can be pulled. In order to make it possible for the valve to be adjusted quickly, the actuator 14 can be designed with piezoelectric elements for moving the diaphragm 18 and/or the adjusting pin 15.

Figure 2 shows the valve of Figure 1, in which by movement of the actuator 14 the spring 12 has pushed the diaphragm 18 towards the valve body 6, with the result that the sealing surface 21 is resting upon the internal diameter of the gap 20 against the flexible sealing surface 19. As a result of this, the gap 20, viewed from the channel 17, is divergent and if there is a higher liquid pressure at the first pipe connection 3 than is the case at the second pipe connection 23, no build-up of pressure will occur in the gap 20. Through the force of the spring 2 and the pressure profile 5 upon the valve body, the valve body 6 remains sealing upon the housing 24, and the valve remains closed, irrespective of the pressure in the first pipe connection 3. The pressure in the first pipe connection 3 has no influence because the liquid pressure in the chamber 11 is the same as that in the channel 17 and the liquid pressure in the chamber 11 acts upon the diaphragm 18 in the opposite direction to that of the liquid pressure upon the valve body 6 when the latter is resting upon the diaphragm 18. The shape of the diaphragm 18 does not change as a result of this when there is an increase or a decrease in the pressure in the channel 17, and the valve remains closed.

Figure 3 shows the valve of Figure 1 when the actuator 14 has just pulled the diaphragm 18 away from the valve body 6. As a result of this, the sealing surface 21 is resting upon the outside diameter of the gap 20 against the flexible sealing surface 19. As a result of this, the gap 20, viewed from the channel 17, is convergent and from the channel 17 build-up of pressure will occur in the gap 20, as shown by a pressure profile 26. Depending on the distance over which the actuator 14 has moved the diaphragm 18 and the convergence in the gap 20, the liquid pressure in the gap 20 will more or less correspond to the pressure in the channel 17. If the counterforce generated by the liquid pressure in the gap 20 is greater than the closing force, the valve body 6 will move away from the diaphragm 18, with the result that the valve opens and the first pipe connection 3 goes into communication with the second pipe connection 23. This situation is shown in Figure 4.

In Figure 4 the valve is open and liquid is flowing through the convergent gap 20 of the first pipe connection 3 to the second pipe connection 23. Through the slight convergence in the gap 20, the flow in the gap 20 causes a pressure profile 27 upon the valve body 6 that differs from the pressure profile arising if the gap 20 has parallel walls 19, 21. Through the slight convergence in the gap 20, the average liquid pressure over the width B is greater than that in the situation where the gap 20 has parallel walls 19, 21. As a result of this, the counterforce upon the valve body 6 is greater than that in the situation where the walls 19, 21 are parallel, so that the gap 20 will remain open through the greater counterforce. The valve being open is therefore primarily dependent upon the shape of the gap 20. The counterforce can be influenced by changing the shape of the gap 20, and in particular by changing the slope of the flexible wall 19.

With changing counterforce the position of the valve body 6 in the housing 24 will also change, because the force exerted by the spring 2 upon the valve body 6 also has to change as a result of the changes in the counterforce. By changing the shape of the gap 20 it is therefore possible to change the position of the valve body 6, and therefore to change the size of the gap 20. Changing the size of the gap 20 changes the throughflow of the liquid through the valve, and it therefore appears to be possible when the valve has been opened to regulate the throughflow through the valve by means of the actuator 14. An adjustable throughflow can be achieved with the valve described here by measuring the result of the changed throughflow through the valve by means of a sensor (not shown) and feeding this value back to the control (not shown) of the actuator 14. An adjustable pressure can be achieved in a comparable way with the valve.

It will be clear that the housing 24, the valve body 6 and the other parts of the valve are shaped in such a way that the flow through the valve and/or the gap 20 in the positions of the valve body 6 occurring takes place without the flow diverging from the walls. This means that edges and corners are rounded and/or bevelled where necessary. Furthermore, the various parts shown diagrammatically here can be composed of or assembled from various parts, and connections, seals and the like provided where necessary.

Figure 5 shows the situation in which the actuator 14 has just changed the shape of the gap 20 to a divergent shape. Through the divergent shape, the flow through the gap 20 acquires a pressure profile 28 which makes the average pressure of the liquid in the gap 20 lower than that in the situation in which the walls 19, 21 of the gap 20 are parallel. The counterforce upon the valve body 6 has consequently been reduced, and the valve body 6 will move towards the flexible wall 19 and close the valve, with the result that the situation shown in Figure 2 is produced.

It will be clear to the person skilled in the art that the closing of the valve is not influenced by the liquid pressure in the first pipe connection 3 and the channel 17 connected to it. This has already been explained above. Furthermore, changes in the liquid pressure in the second pipe connection 23 and the chamber 8 connected to it do not have any influence on the opening or closing of the valve. Although the average pressure in the gap 20 depends partly on the liquid pressure in the chamber 8, the closing force is also increased with increasing pressure in the chamber 8 through the fact that said liquid pressure in the chamber also exerts an influence upon the surface of the broad edge 22 facing the flexible edge. On balance, the resulting force as a consequence of liquid pressures on the valve body 6 is therefore dependent only on the shape of the gap 20.

The exemplary embodiment discussed above illustrates a valve with two pipe connections, in which the first pipe connection 3 is connected to the higher liquid pressure. Embodiments of valves in which the higher pressure is applied to the second pipe connection 23 are also possible. An example of an application for this is the opening of the valve through deformation of the diaphragm 18, after which the valve cannot be closed again until the pressure in the first pipe connection 3 has acquired a comparable value to that of the liquid pressure in the second pipe connection 23. In this application the diaphragm 18 can be deformed by the actuator 14.

Instead of moving the inner periphery of the annular diaphragm 18, it is also possible to design the diaphragm as a closed flat disc on which a stub is fixed. Said stub can be moved in the direction of movement of the valve body 6, and also in the plane of the diaphragm 18. Moving the stub in the plane of the diaphragm 18 causes the flexible wall 19 to acquire an undulating surface, so that openings occur between the sealing surface 21, and the liquid can flow through the gap 20, and the valve body 6 comes away from the diaphragm 18.

In another embodiment of the invention the gap can be made convergent and divergent by designing the valve body with a flexible wall that forms a gap with a fixed wall of the housing. The actuator then forms part of the valve body and is designed, for example, with piezoelectric elements that are connected by means of a cord to a control mechanism.

In another exemplary embodiment of the invention a valve has three pipe connections, it being possible by moving a valve body to connect the first pipe connection to the other two pipe connections or to one of the two pipe connections. In this embodiment the first pipe connection is connected to a channel in the valve body which can move in a housing, the valve body being either able on the one side to form a seal with a first flexible wall of the housing or on the other side to form a seal with a second flexible wall of the housing. The valve body can also come to rest between the two flexible walls with gaps on both sides of the valve body, which gaps can have parallel, divergent or convergent walls through elastic deformation of the flexible walls by means of actuators. By deforming the first flexible wall and the second flexible wall, the valve can be operated in such a way that the valve body seals against either the first flexible wall or the second flexible wall, or neither of the two.

Another embodiment of the invention is shown in Figure 6. This embodiment is comparable to the embodiment shown in the previous figures, in this embodiment the diaphragm 18 being deformed by the pressure difference between the channel 17 and the chamber 11. This pressure difference arises because the channel 17 and the chamber 11 are in communication with each other only through a restriction 29, a small opening. As a result of this, changes in the liquid pressure in the channel 17 will not lead to corresponding changes in the liquid pressure in the chamber 11 until after some time. During this time a pressure difference prevails between the two sides of the diaphragm 18, and the diaphragm 18 will deform through this pressure difference.

If a rapid increase in pressure occurs in the channel 17, the diaphragm 18 will deform in such a way that the flexible wall 19 moves away from the gap 20 on the inner diameter of the valve body 6, and gap 20 is divergent, with the result that the valve body 6 moves away from the diaphragm 18 and the valve opens. As a result of this, oil flows out of the channel 17 and the liquid pressure will decrease, with the result that the diaphragm 18 moves to the valve body again, the flexible wall 19 goes parallel to the sealing surface 21 again so that the gap 20 has parallel walls again, and the valve body 6 seals again against the diaphragm 18. By removing liquid from the channel 17 with a pressure pulse in the channel 17, these pressure pulsations are damped and the valve can be used as a pulsation damper.

## Claims

1. Device for controlling a liquid flow, comprising a housing (24), a valve body (6) which can be moved in a direction of movement (4) in the housing and has an internal channel (17) which is in communication with a first pipe connection (3), and a first chamber (8) which is in communication with a second pipe connection (23), which first chamber has, more or less perpendicular to the direction of movement, a first annular sealing surface (19) against which a second annular sealing surface (21) of the valve body can rest in a sealing manner under the influence of pressure means, and thereby produces a first seal with an annular gap (20) having two walls which are formed by the annular sealing surfaces, **characterized in that** one of the walls (19) comprises a thin ring (18) with an inner periphery and an outer periphery or a thin disc with a centre and an outer periphery, the inner periphery or the centre being capable of moving elastically in the direction of movement (4) relative to the outer periphery.

2. Device according to Claim 1, in which the disc is fixed in the housing (24), having on the one side the valve body (6) with the internal channel (17) and on the other side a second chamber (11) and means present for generating pressure difference between the internal channel and the second chamber.

3. Device according to Claim 2, in which the second chamber (11) and the internal channel (17) are connected to each other by a small opening (29).

4. Device according to Claim 1, in which the two sides of the thin wall or the thin disc are in communication with each other, and movement means (12, 14, 15, 25) are provided in order to move the centre of the disc or the inner periphery of the ring (18) relative to the outer periphery.

5. Device according to Claim 4, in which the movement means (12, 14, 15, 25) comprise piezoelectric elements.

6. Device for controlling a liquid flow, comprising a housing (24), a valve body (6) which can be moved in a direction of movement in the housing and has an internal channel (17) which is in communication with a first pipe connection (3), and a chamber (8) which is in communication with a second pipe connection (23), which chamber has, more or less perpendicular to the direction of movement, a first annular sealing surface (19) against which a second annular sealing surface (21) of the valve body can rest in a sealing manner under the influence of pressure means, and thereby produces a first seal with an annular gap (20) having two walls which are formed by the annular sealing surfaces, **characterized in that** one of the walls (19, 21) comprises a disc with a centre and an outer periphery, the centre being capable of being tilted elastically relative to the plane of the outer periphery.
